# EUROPÄISCHE PATENTANMELDUNG

(11) **EP 3 995 333 A1**
(43) Veröffentlichungstag der Anmeldung: **11.05.2022**
(21) Anmeldenummer: 21204989.4
(22) Anmeldetag: 27.10.2021
(51) Int. Cl.: B60H 1/00

(54) **AUFDACHKLIMAANLAGE ZUR MONTAGE AUF EINEM FAHRZEUGDACH**

(30) Priorität: 09.11.2020 DE 102020214027
(71) Anmelder: MAHLE International GmbH, 70376 Stuttgart (DE)
(72) Erfinder: ARGENTO, Alexander, 67071 Ludwigshafen (DE); HIPP, Dr. Christoph, 70192 Stuttgart (DE); SEHGAL, Deepak, 70437 Stuttgart (DE); WIESTNER, Armin, 71397 Leutenbach (DE)
(74) Vertreter: BRP Renaud & Partner mbB Rechtsanwälte Patentanwälte Steuerberater

(57) **Zusammenfassung**

Aufdachklimaanlage (1) zur Montage auf einem Fahrzeugdach, aufweisend eine Klimatisiereinrichtung (2) zum Klimatisieren eines Fahrzeuginnenraums, an die zu ihrer lösbaren oder unlösbaren Fixierung an einem Fahrzeugdach eine Rahmeneinrichtung (3) aus berührend zusammenhängenden Rahmenelementen (4) angeordnet ist, wobei wenigstens ein Rahmenelement (4) zur Luftführung von Luft zur Betriebsluftversorgung der Klimatisiereinrichtung (2) eine Lüftungsanordnung (5) aufweist.

## Beschreibung

Die Erfindung betrifft eine Aufdachklimaanlage zur Montage auf einem Fahrzeugdach nach dem Oberbegriff des Anspruchs 1.

Aufdachklimaanlagen dieser Art kommen in der Regel bei Fahrzeuganwendungen zum Einsatz, beispielsweise bei Straßen- oder Schienenfahrzeugen. Sie werden dort vorzugsweise zum Kühlen eines Fahrzeuginnenraums eingesetzt.

In der DE 10 2015 211 610 A1 ist eine Aufdachklimaanlage zur Montage auf einem Fahrzeugdach eines Fahrzeugs zum Klimatisieren eines Innenraum des Fahrzeugs beschrieben. Die Aufdachklimaanlage weist ein Kondensatormodul, das ein Kondensatorgehäuse und einen im Kondensatorgehäuse angeordneten Kondensator umfasst, und einen Tragrahmen auf, der das Kondensatormodul trägt und selbiges am Fahrzeugdach hält. Zur Luftführung von Luft zur Betriebsluftversorgung des Kondensatormoduls hat die Aufdachklimaanlage eine zentrale Lüftungsöffnung, durch die hindurch Luft zum Kondensatormodul strömen kann. Als nachteilig kann hier angesehen werden, dass die zentrale Lüftungsöffnung relativ großbauend ist und im Hinblick auf die strömungsmechanischen Eigenschafen ungenügend ist, bspw. ist ein Durchströmungswiderstand der zentralen Lüftungsöffnung relativ hoch.

Die Aufgabe der Erfindung liegt daher darin, eine verbesserte oder zumindest eine andere Ausführungsform einer Aufdachklimaanlage anzugeben, insb. sollen die strömungsmechanischen Eigenschaften einer solchen Aufdachklimaanlage optimiert werden.

Bei der vorliegenden Erfindung wird diese Aufgabe insb. durch den Gegenstand des unabhängigen Anspruchs gelöst. Vorteilhafte Ausführungsformen sind Gegenstand der abhängigen Ansprüche und der Beschreibung.

Der Grundgedanke der Erfindung liegt darin, die seither bei Aufdachklimaanlagen verwendete zentrale Lüftungsöffnung durch eine Vielzahl von einzelnen, dezentral verteilten Einzel-Luftöffnungen zu ersetzen oder zumindest zu ergänzen.

Hierzu ist nach der Erfindung vorgesehen, dass eine Aufdachklimaanlage, die zur Montage auf einem Fahrzeugdach eines Fahrzeuges geeignet ist, eine Klimatisiereinrichtung zum Klimatisieren eines Fahrzeuginnenraums des Fahrzeuges aufweist. Diese kann ein Fahrzeuginnenraum hinsichtlich der Lufttemperatur und/oder der Luftfeuchtigkeit oder anderen Komfortgrößen nach Insassenvorgaben konditionieren. Die Klimatisiereinrichtung kann bspw. durch ein Kondensatormodul gebildet sein. An die Klimatisiereinrichtung ist eine, vorzugsweise integral ausgeführte, Rahmeneinrichtung berührend angeordnet. Mittels der Rahmeneinrichtung kann die Klimatisiereinrichtung lösbar oder unlösbar an einem Fahrzeugdach des Fahrzeuges fixiert werden. Bspw. kann die Rahmeneinrichtung lösbar mittels Befestigungsschrauben oder unlösbar mit einem Klebstoff an dem besagten Fahrzeugdach befestigt sein. Die Rahmeneinrichtung weist ihrerseits mehrere Rahmenelemente auf, die berührend zusammenhängen miteinander verbunden sind, bspw. stoffschlüssig oder kraft- und formschlüssig. Erfindungsgemäß ist vorgesehen, dass wenigstens ein Rahmenelement dieser Rahmenelemente eine Lüftungsanordnung aufweist, die zur Luftzuführung von Luft, insb. Umgebungsluft des Fahrzeuges, zur Betriebsluftversorgung der Klimatisiereinrichtung der Aufdachklimaanlage dient. Die Lüftungsanordnung hat mehrere, insb. separat ausgebildete und weiter insb. fluiddurchströmbare, Lüftungskanäle, die man jeweils auch als Einzel-Luftöffnungen bezeichnen kann, die jeweils entlang ihrer jeweiligen Hauptausdehnungsrichtung eine Kanallängsmittelachse definieren. Vorzugsweise durchsetzen die Lüftungskanäle ein jeweiliges Rahmenelement vollständig. Dadurch kann im Betrieb der Aufdachklimaanlage Luft von der ein Fahrzeug umgebenden Atmosphäre her direkt oder im Wesentlichen ohne Umwege durch das mindestens eine Rahmenelement hindurch zur Klimatisiereinrichtung strömen. Die jeweiligen Rahmenelemente bilden damit strömungsoffene Komponenten der Aufdachklimaanlage. Das hat den Vorteil, dass die Durchströmung der Aufdachklimaanlage verbessert und ggf. ein der Luft entgegengebrachter Durchströmungswiderstand reduziert ist, wodurch erfindungsgemäße Aufdachklimaanlagen relativ wirtschaftlich betreibbar sind.

Vorzugsweise durchsetzen die Lüftungskanäle ein jeweiliges Rahmenelement vollständig, wobei zweckmäßigerweise wenigstens ein oder jeder Lüftungskanal unter Ausbildung einer Umgebungsöffnung hin zu einer die Aufdachklimaanlage umgebenden Atmosphäre und unter Ausbildung einer Innenöffnung hin zu der Klimatisiereinrichtung am jeweiligen Rahmenelement ausmündet. Die Umgebungsöffnung und die Innenöffnung des jeweiligen Lüftungskanals sind dabei zweckmäßigerweise an zueinander entgegengesetzt orientierten Elementflächen des jeweiligen Rahmenelements angeordnet, sprich sie münden an zueinander entgegengesetzten Elementflächen aus. Das hat den Effekt, dass Luft von der umgebenden Atmosphäre her durch die Lüftungskanäle hindurch zur Klimatisiereinrichtung strömen kann, sozusagen durch die Rahmenelemente hindurch. Das hat den Vorteil, dass Luft ohne Umwege über bspw. relativ großbauende Lüftungseinlässe zur Klimatisiereinrichtung strömen kann.

Weiter zweckmäßigerweise sind wenigstens zwei oder alle Kanallängsmittelachsen oder zwei oder alle Lüftungskanäle einer Lüftungsanordnung zueinander parallel oder winkelig ausgerichtet. Das hat den Effekt, dass die Lüftungskanäle der zur Klimatisiereinrichtung strömenden Luft einen relativ geringen Durchströmungswiderstand bieten, so dass die Durchströmung energetisch relativ günstig ist.

Um die geometrische Form eines Lüftungskanals zu definieren, kann wenigstens ein Lüftungskanal einen bezüglich seiner Kanallängsmittelachse quer orientierten Kanalflächenquerschnitt aufweisen. Dieser Kanalflächenquerschnitt ist vorzugsweise der durchströmbare freie Flächenquerschnitt.

Der Kanalflächenquerschnitt wenigstens eines Lüftungskanals, insb. aller Lüftungskanäle, kann entlang der jeweiligen Kanallängsmittelachse des jeweiligen Lüftungskanals von durchgängig konstanter Querschnittsfläche sein. Derartige Lüftungskanäle bieten den Vorteil, dass der zur Klimatisiereinrichtung strömenden Luft ein relativ geringer Durchströmungswiderstand entgegensteht. Dadurch kann die Durchströmung energetisch relativ vorteilhaft realisiert werden.

Zweckmäßigerweise kann der Kanalflächenquerschnitt eines ersten Lüftungskanals ein dreieckig geformter Dreieckkanalflächenquerschnitt sein. Weiterhin kann der Kanalflächenquerschnitt eines weiteren, zweiten Lüftungskanals ein viereckig geformter Viereckkanalflächenquerschnitt sein. Ferner kann der Kanalflächenquerschnitt eines weiteren, dritten Lüftungskanals ein fünfeckig geformter Fünfecckanalflächenquerschnitt sein. Alternativ kann der Kanalflächenquerschnitt eines weiteren Lüftungskanals vieleckig gestaltet sein. Weiter alternativ kann wenigstens ein Lüftungskanal wenigstens einer Lüftungsanordnung wabenförmig gestaltet oder in wabenförmiger Bauweise gestaltet sein. Weiter alternativ kann vorgesehen sein, dass wenigstens ein Lüftungskanal wenigstens einer Lüftungsanordnung in der Form eines, insb. innenhohlen, hexagonalen Prismas gestaltet ist. Hierdurch wird jeweils der Vorteil erreicht, dass Lüftungskanäle zum einen besonders durchströmungswiderstandgünstig sind. Zum anderen wird hierdurch der Vorteil erreicht, dass Lüftungskanäle relativ einfach und kostengünstig herstellbar sind, beispielsweise im Rahmen von Kunststoffspritzgussverfahren.

Um die Lüftungskanäle besonders durchströmungswiderstandgünstig zu gestalten kann vorgesehen sein, dass wenigstens ein einziger oder wenigstens 50% der oder jeder der Lüftungskanäle einer jeweiligen Lüftungsanordnung erste Lüftungskanäle sind. Zusätzlich oder alternativ kann wenigstens ein einziger oder wenigstens 25% der oder jeder der Lüftungskanäle der jeweiligen Lüftungsanordnung zweite Lüftungskanäle aufweisen. Zusätzlich oder alternativ kann wenigstens ein einziger oder wenigstens 25% der oder jeder der Lüftungskanäle der jeweiligen Lüftungsanordnung dritte Lüftungskanäle aufweisen. Das hat den Effekt, dass ein Rahmenelement mit Lüftungskanälen unterschiedlichen Kanalflächenquerschnitts ausgerüstet ist, wodurch sowohl optische als auch strömungsmechanische Vorteile erzielbar sind.

Die Lüftungskanäle können jeweils strömungstechnisch parallel durchströmt werden.

Weiter kann wenigstens ein Eck eines Kanalflächenquerschnitts eines Lüftungskanals einer jeweiligen Lüftungsanordnung, insb. unmittelbar, benachbart zu wenigstens einem weiteren Eck eines weiteren Kanalflächenquerschnitts eines weiteren Lüftungskanals der jeweiligen Lüftungsanordnung angeordnet sein. Das hat den Effekt, dass wenigstens zwei Ecken, insb. mehrere Ecken, beieinander angeordnet sind. Das hat den Vorteil, dass sich die Lüftungskanäle der jeweiligen Lüftungsanordnung in einem regelmäßigen Muster zueinander anordnen lassen.

Weiterhin kann jeder Kanalflächenquerschnitt jedes Lüftungskanals einer Lüftungsanordnung Ecken aufweisen. Die Ecken eines Kanalflächenquerschnitts verbinden Kanalflächenkanten des jeweiligen Kanalflächenquerschnitts miteinander. Die Lüftungskanäle der jeweiligen Lüftungsanordnung lassen sich dabei so anordnen, dass wenigstens eine Kanalflächenkante eines Kanalflächenquerschnittes eines Lüftungskanals der jeweiligen Lüftungsanordnung parallel oder im Wesentlichen parallel zu einer Kanalflächenkante eines weiteren Kanalflächenquerschnittes eines weiteren Lüftungskanals der jeweiligen Lüftungsanordnung angeordnet ist. Auch hierdurch kann der Vorteil erreicht werden, dass sich die Lüftungskanäle der jeweiligen Lüftungsanordnung in einem regelmäßigen Muster zueinander anordnen lassen.

Der Begriff "Eck" im Sinne der Erfindung kann als Berührpunkt zweier Kanalflächenkanten eines jeweiligen Kanalflächenquerschnitts verstanden werden.

Ein Kanalflächenquerschnitt kann die geometrische Form einer Innenöffnung und/oder einer Umgebungsöffnung eines Lüftungskanals definieren.

Weiter zweckmäßigerweise kann die Rahmeneinrichtung wenigstens zwei oder mehr trägerartige Rahmenstreben aufweisen, die, insb. integral, zusammenhängend und jeweils durch ein Rahmenelement gebildet sind. Dadurch kann eine Rahmenstrebe die Merkmale eines Rahmenelements aufweisen. Das hat den Effekt, dass auch Rahmenstreben Lüftungsanordnungen aus Lüftungskanälen aufweisen können. Das hat den Vorteil, dass Luft sozusagen durch die Rahmenstreben hindurch strömen kann. Die Rahmenelemente können auch weitere Komponenten der Rahmeneinrichtung bilden. Beispielsweise kann ein Rahmenelement ein Bestückungsteil der Rahmeneinrichtung bilden, das zum Bestücken mit der, insb. zum lösbaren Fixieren der, Klimatisiereinrichtung dient. Exemplarisch kann ein Rahmenelement auch ein Fixierteil der Rahmeneinrichtung bilden, das die Montage der jeweiligen Rahmeneinrichtung an weiteren Rahmeneinrichtungen gestattet. Das hat den vorteilhaften Effekt, dass die Rahmeneinrichtung relativ flexibel einsetzbar ist.

Zweckmäßigerweise kann die Rahmeneinrichtung drei Rahmenstreben aufweisen, die zueinander rechtwinklig oder im Wesentlichen rechtwinkelig in einer gemeinsamen Rahmenebene angeordnet sind. Dabei kann vorgesehen sein, dass die Rahmenstreben in einer u-Form angeordnet sind, also so, dass jeweils freie Rahmenstreben-Enden von Rahmenstreben aneinander angeordnet sind. Zweckmäßigerweise sind die Rahmenstreben-Enden der Rahmenstreben stoffschlüssig miteinander verbunden.

Weiter zweckmäßigerweise können die Kanallängsmittelachsen der Lüftungskanäle wenigstens einer Lüftungsanordnung einer Rahmenstrebe quer oder rechtwinkelig oder winkelig bezüglich der Hauptausdehnungsrichtung der jeweiligen Rahmenstrebe ausgerichtet sein. Das hat den Effekt, dass die jeweilige Rahmenstrebe quer von Lüftungskanälen durchsetzt ist, so dass Luft sozusagen quer oder rechtwinkelig durch die jeweilige Rahmenstrebe strömen kann.

Weiter zweckmäßigerweise können alle Rahmenstreben stoffschlüssig aneinander angeordnet sein, so dass eine einstückige Rahmeneinrichtung bereitgestellt ist. Dabei können alle Rahmenstreben jeweils genau eine Lüftungsanordnung aufweisen. Es ist natürlich auch vorstellbar, dass alle Rahmenstreben separat, also jeweils als eigene Baueinheit, vorgesehen und aneinander mittels Befestigungsmitteln kraft- und/oder formschlüssig oder kraftschlüssig aneinander fixiert sind.

Zusammenfassend bleibt festzuhalten: Die vorliegende Erfindung betrifft vorzugsweise eine Aufdachklimaanlage zur Montage auf einem Fahrzeugdach, aufweisend eine Klimatisiereinrichtung zum Klimatisieren eines Fahrzeuginnenraums, an die zu ihrer lösbaren oder unlösbaren Fixierung an einem Fahrzeugdach eine Rahmeneinrichtung aus berührend zusammenhängenden Rahmenelementen angeordnet ist. Wesentlich für die Erfindung ist, dass wenigstens ein Rahmenelement zur Luftführung von Luft zur Betriebsluftversorgung der Klimatisiereinrichtung eine Lüftungsanordnung aufweist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: in einer perspektivischen Ansicht ein bevorzugtes Ausführungsbeispiel einer erfindungsgemäßen Aufdachklimaanlage,
- Fig. 2: eine perspektivische Ansicht einer in u-Form gestalteten Rahmeneinrichtung der Aufdachklimaanlage aus Fig. 1 und
- Fig. 3: in einer perspektivischen Ansicht ein bevorzugtes weiteres Ausführungsbeispiel einer erfindungsgemäßen Aufdachklimaanlage.

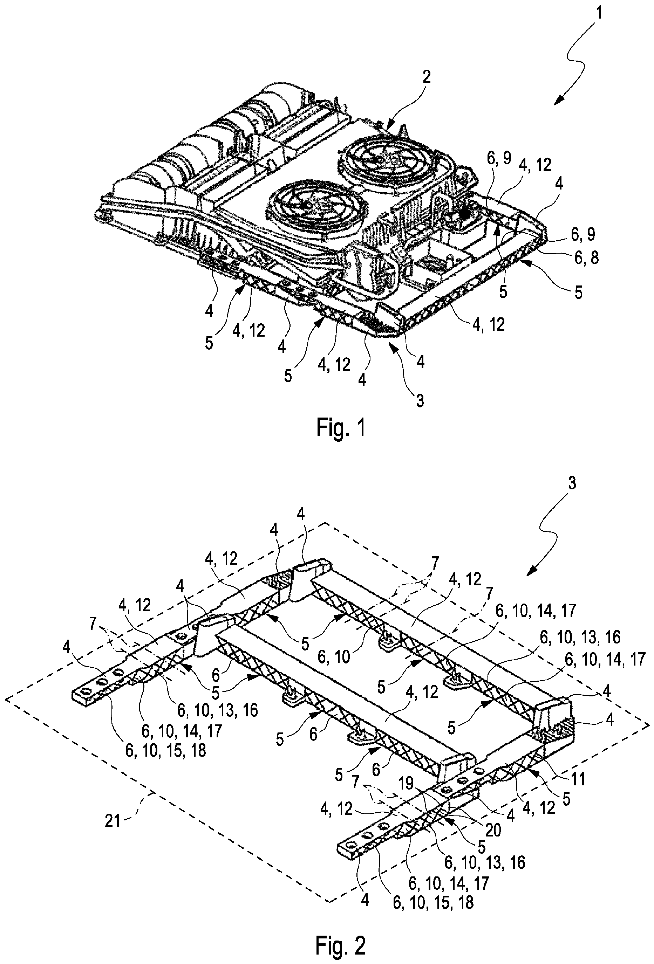

Die Zeichnungen zeigen ein bevorzugtes Ausführungsbeispiel einer Aufdachklimaanlage 1, die zur Montage auf einem Fahrzeugdach eines nicht illustrierten Fahrzeuges vorgesehen ist und zum Klimatisieren eines Fahrzeuginnenraums des jeweiligen Fahrzeuges dient. Die Aufdachklimaanlage 1 weist eine mit dem Bezugszeichen 2 bezeichnete Klimatisiereinrichtung auf, die die eigentliche Klimatisierung übernimmt, exemplarisch ist die Klimatisiereinrichtung 2 hierzu mit nicht näher erläuterten Klimakomponenten ausgestattet, bspw. ein Kondensatormodul. Die Aufdachklimaanlage 1 weist weiterhin eine Rahmeneinrichtung 3 aus berührend zusammenhängenden Rahmenelementen 4 auf, die zur lösbaren oder unlösbaren Fixierung der Klimatisiereinrichtung 2 am Fahrzeugdach dient, siehe die Fig. 1 und 2. Exemplarisch ist die Rahmeneinrichtung 3 einerseits berührend an der Klimatisiereinrichtung 2 festgemacht und zum anderen am Fahrzeugdach befestigt.

Die Rahmenelemente 4 der Rahmeneinrichtung 3 bilden exemplarisch mehrere trägerartige Rahmenstreben 12, die nach den Fig. 1 und 2 stoffschlüssig zusammenhängend gestaltet sind. Daneben bilden die Rahmenelemente 4 auch nicht näher bezeichnete Bestückungsteile der Rahmeneinrichtung 3 und ebenfalls nicht näher bezeichnete Fixierteile der Rahmeneinrichtung 3, die jeweils an den Rahmenstreben 12 angeordnet sind und beispielsweise zum Bestücken mit der Klimatisiereinrichtung 2 dienen. Jedenfalls sind die Rahmenstreben 12 exemplarisch zueinander rechtwinklig ausgerichtet und in einer gemeinsamen Rahmenebene 21 angeordnet, so dass sie eine u-Form bilden, siehe auch die Fig. 2.

Um die Klimatisiereinrichtung 2 in Betrieb nehmen zu können, ist eine Versorgung der Klimatisiereinrichtung 2, insbesondere der Klimakomponenten der Klimatisiereinrichtung 2, mit Luft, insbesondere Frischluft oder Umgebungsluft, vorgesehen. Um die Versorgung mit Luft strömungsmechanisch optimal zu gestalten, ist wenigstens ein oder sind mehrere Rahmenelemente 4 der Rahmeneinrichtung 3 zur Durchführung von Luft gestaltet, sozusagen luftdurchlässig. Konstruktiv wird dies erreicht, indem die Rahmenelemente 4 jeweils mit einem einzigen oder nach Fig. 1 und 2 mit mehreren Lüftungsanordnungen 5 ausgestattet werden. Die Lüftungsanordnungen 5 haben jeweils mehrere von Luft durchströmbare, offene Lüftungskanäle 6, die das jeweilige Rahmenelement 4 vollständig durchsetzen, also beispielsweise eine Rahmenstrebe 12 und/oder ein Fixierteil und/oder ein Bestückungsteil. Jeder Lüftungskanal 6 definiert dabei eine entlang seiner jeweiligen Hauptausdehnungsrichtung, sozusagen entlang der Langseite des jeweiligen Lüftungskanals 6, eine mit dem Bezugszeichen 7 bezeichnete Kanallängsmittelachse. Jeder Lüftungskanal 6 hat darüber hinaus einen zur jeweiligen Kanallängsmittelachse 7 quer orientierten Kanalflächenquerschnitt 10, der exemplarisch über die gesamte Tiefe des Lüftungskanals 6, also durchgängig, flächenmäßig konstant ist. In den Fig. 1 und 2 kann man in diesem Zusammenhang auch erkennen, dass die Kanallängsmittelachsen 7 der Lüftungskanäle 6 einer Lüftungsanordnung 5 zueinander parallel orientiert sind, obwohl man sich auch zueinander winkelig Kanallängsmittelachsen 7 vorstellen kann. Insbesondere sind die Kanallängsmittelachsen 7 der Lüftungskanäle 6 einer Lüftungsanordnung 5 quer bezüglich der Hauptausdehnungsrichtung einer Rahmenstrebe 12 ausgerichtet.

Die einzelnen Lüftungskanäle 6 einer Lüftungsanordnung 5 münden am jeweiligen Rahmenelement 4 zum einen zu der das Fahrzeug umgebenden Atmosphäre hin aus, wobei jeder Lüftungskanal 6 eine Umgebungsöffnung 8 definiert, siehe Fig. 1. Zum anderen münden die einzelnen Lüftungskanäle 6 der jeweiligen Lüftungsanordnung 5 am jeweiligen Rahmenelement 4, exemplarisch gegenüberliegend zu den Umgebungsöffnung 8, zur Klimatisiereinrichtung 2 hin aus, wobei jeder Lüftungskanal 6 eine sogenannte Innenöffnung 9 bildet, siehe Fig. 1. Dadurch kann Luft von der umgebenden Atmosphäre her durch die Lüftungskanäle 6 zur Klimatisiereinrichtung 2 gelangen.

Um die Führung der Luft strömungsmechanisch optimal zu gestalten, ist der Kanalflächenquerschnitt 10 jedes Lüftungskanals 6 jeder Lüftungsanordnung 5 entlang der jeweiligen Kanallängsmittelachse 7 von durchgängig konstanter Querschnittsfläche. Aus demselben Grund sind mehrere Kanalflächenquerschnitte 10 erster Lüftungskanäle 6, 13 dreieckig geformt, wobei diese Kanalflächenquerschnitte 10 exemplarisch als Dreieckkanalflächenquerschnitte benannt und in den Fig. 1 und 2 jeweils durch das Bezugszeichen 16 bezeichnet sind, weiterhin sind mehrere Kanalflächenquerschnitte 10 zweiter Lüftungskanäle 6, 14 viereckig geformt, wobei diese Kanalflächenquerschnitte 10 exemplarisch als Viereckkanalflächenquerschnitte benannt und in den Fig. 1 und 2 jeweils durch das Bezugszeichen 17 bezeichnet sind, und zuletzt sind mehrere Kanalflächenquerschnitte 10 dritter Lüftungskanäle 6, 15 fünfeckig geformt, wobei diese Kanalflächenquerschnitte 10 exemplarisch als Fünfeckkanalflächenquerschnitt benannt und in den Fig. 1 und 2 jeweils durch das Bezugszeichen 18 bezeichnet sind. Intensive Untersuchungen haben ergeben, dass Luft strömungsmechanisch optimal durch Lüftungsanordnungen 5 strömt, wenn diese jeweils 50% erste Lüftungskanäle 6, 13, wenigstens 25% zweite Lüftungskanäle 6, 14 und wenigstens 25% dritte Lüftungskanäle 6,15 aufweisen.

Insb. in Fig. 2 kann man erkennen, dass jeder Kanalflächenquerschnitt Ecken 19 und Kanalflächenkanten 20 aufweist, wobei jede Ecke 19 jeweils über zwei Kanalflächenkanten 20 mit zwei weiteren benachbarten Ecken 19 verbunden ist. Exemplarisch können die Ecken 19 eines Kanalflächenquerschnitts 10 eines Lüftungskanals 6 einer Lüftungsanordnung 5 benachbart zu wenigstens einem weiteren Eck 19 eines weiteren Kanalflächenquerschnitts 10 eines weiteren Lüftungskanals 6 der jeweiligen Lüftungsanordnung 5 angeordnet sein, siehe Fig. 2. Zudem können die Kanalflächenkanten 20 dieser beiden Lüftungskanäle 6 parallel zueinander angeordnet sein. Dadurch erhält man sozusagen eine wabenförmige Gestalt einer Lüftungsanordnung 5 bzw. eine hexagonale Prisma-Gestalt 11 eines Lüftungskanals 6 einer Lüftungsanordnung 5.

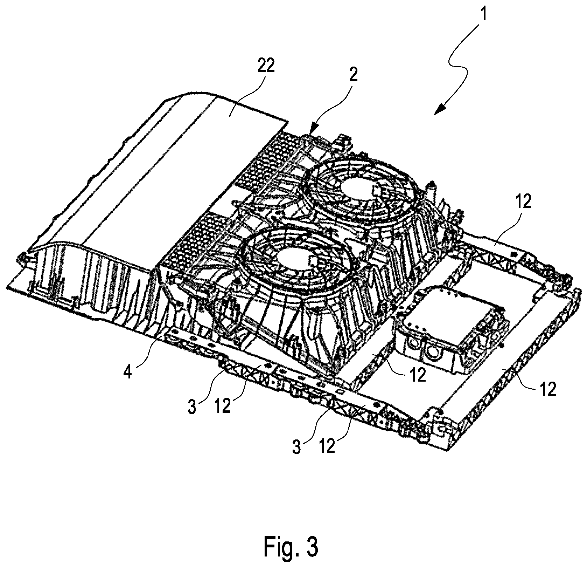

Die Fig. 3 zeigt in einer perspektivischen Ansicht ein bevorzugtes weiteres Ausführungsbeispiel einer erfindungsgemäßen Aufdachklimaanlage 1. Im Unterschied zum vorangehenden Ausführungsbeispiel ist die vorliegende Aufdachklimaanlage 1 mit einer gebogenen Haube 22 ausgerüstet, welche die Klimatisiereinrichtung 2 zumindest abschnittsweise überdeckt. Eine berührend an den Hauptrahmen 4 angesetzte, u-förmig gestaltete erste Rahmeneinrichtung 3, weist drei längliche Rahmenstreben 12 auf, welche exemplarisch jeweils als separate Baueinheiten ausgeführt und berührend aneinander angeordnet sind, bspw. kann man Befestigungsschrauben oder Klemmmittel oder einen Klebstoff zu deren gegenseitigen Fixierung verwenden. An die erste Rahmeneinrichtung 3 ist eine weitere, zweite Rahmeneinrichtung 3 angesetzt. Die zweite Rahmeneinrichtung 3 ist identisch zur ersten Rahmeneinrichtung 3 ausgeführt, d.h. dass sie verfügt ebenfalls über drei separat ausgebildete längliche Rahmenstreben 12. Durch diese Anordnung ist zwischen dem Hauptrahmen 4 und der ersten Rahmeneinrichtung 3 sowie zwischen der ersten Rahmeneinrichtung 3 und der zweiten Rahmeneinrichtung 3 freier Installationsraum für Komponenten der Klimatisiereinrichtung 2 geschaffen. Man kann sich vorstellen, dass die Komponenten der Klimatisierungseinrichtung 2, bspw. ein Kondensatormodul, an die jeweilige Rahmeneinrichtung 3 mittels Befestigungsschrauben fixiert oder mittels einer Klemmung fest geklemmt sind. Natürlich ist es auch denkbar, die Komponenten der Klimatisierungseinrichtung 2 mithilfe eines Klebstoffes an einer jeweiligen Rahmeneinrichtung 3 unlösbar fest zu kleben.

## Patentansprüche

1. Aufdachklimaanlage zur Montage auf einem Fahrzeugdach,
aufweisend eine Klimatisiereinrichtung (2) zum Klimatisieren eines Fahrzeuginnenraums, an die zu ihrer lösbaren oder unlösbaren Fixierung an einem Fahrzeugdach eine Rahmeneinrichtung (3) aus berührend zusammenhängenden Rahmenelementen (4) angeordnet ist,
**dadurch gekennzeichnet, dass**
wenigstens ein Rahmenelement (4) zur Luftführung von Luft zur Betriebsluftversorgung der Klimatisiereinrichtung (2) mindestens eine Lüftungsanordnung (5) aufweist, wobei jede Lüftungsanordnung (5) mindestens einen jeweils eine Kanallängsmittelachse (7) definierenden Lüftungskanal (6) aufweist.

2. Vorrichtung nach Anspruch 1,
**dadurch gekennzeichnet, dass**
wenigstens ein Lüftungskanal (6) unter Ausbildung einer Umgebungsöffnung (8) zu einer die Aufdachklimaanlage (1) umgebenden Atmosphäre hin und unter Ausbildung einer Innenöffnung (9) zu der Klimatisiereinrichtung (2) hin am jeweiligen Rahmenelement (4) ausmündet, wobei der jeweilige Lüftungskanal (6) das jeweilige Rahmenelement (4) vollständig durchsetzt.

3. Vorrichtung nach Anspruch 1 oder 2,
**dadurch gekennzeichnet, dass**
die Kanallängsmittelachsen (7) wenigstens zweier oder aller Lüftungskanäle (6) einer Lüftungsanordnung (5) zueinander parallel oder winkelig ausgerichtet sind.

4. Vorrichtung nach einem der vorhergehenden Ansprüche,
**dadurch gekennzeichnet, dass**
jeder Lüftungskanal (6) einer Lüftungsanordnung (5) einen bezüglich seiner jeweiligen Kanallängsmittelachse (7) quer orientierten Kanalflächenquerschnitt (10) aufweist.

5. Vorrichtung nach Anspruch 4,
**dadurch gekennzeichnet, dass**
der Kanalflächenquerschnitt (10) wenigstens eines Lüftungskanals (6) entlang der Kanallängsmittelachse (7) des jeweiligen Lüftungskanals (6) von durchgängig konstanter Querschnittsfläche ist.

6. Vorrichtung nach einem der Ansprüche 4 oder 5,
**dadurch gekennzeichnet,**
- **dass** der Kanalflächenquerschnitt (10) eines ersten Lüftungskanals (6,13) ein dreieckig geformter Dreieckkanalflächenquerschnitt (16) ist und/oder
- **dass** der Kanalflächenquerschnitt (10) eines zweiten Lüftungskanals (6,14) ein viereckig geformter Viereckkanalflächenquerschnitt (17) ist und/oder
- **dass** der Kanalflächenquerschnitt (10) eines dritten Lüftungskanals (6,15) ein fünfeckig geformter Fünfeckkanalflächenquerschnitt (18) oder ein Vieleckkanalflächenquerschnitt ist.

7. Vorrichtung nach Anspruch 6,
**dadurch gekennzeichnet,**
- **dass** wenigstens ein einziger oder wenigstens 50% der oder jeder der Lüftungskanäle (6) der jeweiligen Lüftungsanordnung (5) erste Lüftungskanäle (6,13) sind und/oder
- **dass** wenigstens ein einziger oder wenigstens 25% der oder jeder der Lüftungskanäle (6) der jeweiligen Lüftungsanordnung (5) zweite Lüftungskanäle (6,14) sind und/oder
- **dass** wenigstens ein einziger oder wenigstens 25% der oder jeder der Lüftungskanäle (6) der jeweiligen Lüftungsanordnung (5) dritte Lüftungskanäle (6,15) sind.

8. Vorrichtung nach Anspruch 6 oder 7,
**dadurch gekennzeichnet, dass**
wenigsten ein Eck (19) eines Kanalflächenquerschnitts (10) eines Lüftungskanals (6) der jeweiligen Lüftungsanordnung (5) unmittelbar benachbart zu wenigstens einem weiteren Eck (19) eines weiteren Kanalflächenquerschnitts (10) eines weiteren Lüftungskanals (6) der jeweiligen Lüftungsanordnung (5) angeordnet ist.

9. Vorrichtung nach einem der Ansprüche 6 bis 8,
**dadurch gekennzeichnet, dass**
jeder Kanalflächenquerschnitt (10) der Lüftungskanäle (6) der jeweiligen Lüftungsanordnung (5) Ecken (19) aufweist, die Kanalflächenkanten (20) eines jeweiligen Kanalflächenquerschnitts (10) miteinander verbinden, wobei wenigstens eine Kanalflächenkante (20) eines Kanalflächenquerschnittes (10) eines Lüftungskanals (6) der jeweiligen Lüftungsanordnung (5) parallel oder im Wesentlichen parallel zu einer Kanalflächenkante (20) eines weiteren Kanalflächenquerschnittes (10) eines weiteren Lüftungskanals (6) der jeweiligen Lüftungsanordnung (5) angeordnet ist.

10. Vorrichtung nach einem der vorhergehenden Ansprüche,
**dadurch gekennzeichnet, dass**
wenigstens ein Lüftungskanal (6) wenigstens einer Lüftungsanordnung (5) wabenförmig gestaltet oder in wabenförmiger Bauweise gestaltet ist.

11. Vorrichtung nach einem der vorhergehenden Ansprüche,
**dadurch gekennzeichnet, dass**
wenigstens ein Lüftungskanal (6) wenigstens einer Lüftungsanordnung (5) in der Form eines hexagonalen Prismas (11) gestaltet ist.

12. Vorrichtung nach einem der vorhergehenden Ansprüche,
**dadurch gekennzeichnet, dass**
die Rahmeneinrichtung (3) wenigstens zwei oder mehr trägerartige Rahmenstreben (12) aufweist, die zusammenhängend oder separat und jeweils durch ein Rahmenelement (4) gebildet sind.

13. Vorrichtung nach Anspruch 12,
**dadurch gekennzeichnet, dass**
die Rahmeneinrichtung (3) drei Rahmenstreben (12) aufweist, die zueinander rechtwinklig oder im Wesentlichen rechtwinkelig in einer gemeinsamen Rahmenebene (21) angeordnet sind.

14. Vorrichtung nach Anspruch 12 oder 13,
**dadurch gekennzeichnet, dass**
die Kanallängsmittelachsen (7) aller Lüftungskanäle (6) wenigstens einer Lüftungsanordnung (5) einer durch ein Rahmenelement (4) gebildeten Rahmenstrebe (12) quer oder winkelig bezüglich der Hauptausdehnungsrichtung der jeweiligen Rahmenstrebe (12) ausgerichtet sind.

15. Vorrichtung nach einem der Ansprüche 12 bis 14,
**dadurch gekennzeichnet, dass**
alle Rahmenstreben (12) stoffschlüssig aneinander angeordnet sind, um eine einstückige Rahmeneinrichtung (3) bereitzustellen, und dass alle Rahmenstreben (12) jeweils genau eine Lüftungsanordnung (5) aufweisen.
